# EUROPÄISCHE PATENTSCHRIFT

(11) **EP 4 037 961 B1**
(45) Veröffentlichungstag und Bekanntmachung des Hinweises auf die Patenterteilung: **16.04.2025**
(21) Anmeldenummer: 20803738.2
(22) Anmeldetag: 01.10.2020
(51) Int. Cl.: B62K 3/00, B62K 15/00

(54) **ALLEINSTEHENDER FALTBARER ROLLER**
SELF-SUPPORTING FOLDING SCOOTER
TROTTINETTE PLIABLE AUTOPORTANTE

(30) Priorität: 02.10.2019 DE 102019006930
(43) Veröffentlichungstag der Anmeldung: 10.08.2022
(73) Patentinhaber: Muhr und Bender KG, 57439 Attendorn (DE)
(72) Erfinder: OMARI, Ahmad, 52074 Aachen (DE)
(74) Vertreter: Neumann Müller Oberwalleney Patentanwälte PartG mbB
(86) Internationale Anmeldenummer: PCT/DE2020/000232
(87) Internationale Veröffentlichungsnummer: WO 2021/063433

(56) Entgegenhaltungen:
- CN-A- 108 082 372
- DE-A1- 10 204 478

## Beschreibung

Die Erfindung betrifft einen faltbaren, alleinstehenden Roller. Faltbare Roller, sei 2- oder 3- rädrig, werden zunehmend als ein wichtiger Bestandteil der Mobilitätswende angesehen. Die meisten Roller verfügen über ein Faltmechanismus, der den Transport und das Verstauen des Rollers vereinfacht.

Im Stand der Technik kommen einfache Faltmechanismen zum Einsatz, die einen eigenständiges Stehen des Rollers im Zusammengefalteten Zustand nicht gewährleisten können. Somit müssen herkömmliche faltbare Roller im zusammengefalteten Zustand auf dem Boden liegen oder an einem Gegenstand angelehnt werden. Ein weiterer Nachteil herkömmlicher Faltmechanismen besteht darin, dass wenn im zusammengefalteten Zustand eine Trolley- Funktion angewandt wird, das Hinterrad samt Straßenschmutz sich unmittelbar im Bereich des Lenkers bzw. des Handgriffs befindet - siehe z.B. DE102011106561 B4 oder EP2174860A1. Andere Offenbarungen, wie z.B. WO002016176124A1, WO002018008869A1 oder FR2821331A1 lösen das beschriebene Problem mit einem Faltmechanismus, dessen wesentlicher Bestandteil ein Schiebeelement ist. Letzteres ist nachteilig da Schiebeelemente gegenüber Scharnierachsen schmutzempfindlicher sind und somit mit einem höheren Verschleiß behaftet sind. Ferner haben herkömmliche Faltmechanismen den Nachteil, dass oftmals mehrere Handgriffe benötigt werden, um den Roller vollständig in den zusammengefalteten Zustand zu befördern. Die WO2003/55747A1 und die CN 108082372 offenbaren weitere faltbare Roller, bei denen Faltmechanismus allerdings aufwendig umgesetzt ist.

Aus der DE10204478A1, die als nächstliegender Stand der Technik angesehenen werden kann, ist ein multifunktionales mobiles Gerät bekannt, das sich durch einen Ein- bzw. Ausklappmechanismus als Roller, Trolley oder Caddy verwenden lässt. Der Roller weist die Hauptbaugruppen Frontteil, Heckteil und Lenkereinheit auf, die drehbar miteinander verbunden sind. Das Frontteil besteht aus zwei Hauptträgern, die mittels eines Trittbretts miteinander verbunden sind. Die beiden Hauptträger sind ferner über eine erste Achse miteinander verbunden, die der Drehpunkt für die Lenkereinheit ist, und mit einer zweiten Achse miteinander verbunden, die den Drehpunkt für das Heckteil darstellt. Um vom Roller-Zustand (0° Position) in den Caddy-Zustand (140° Position) zu gelangen wird ein Entriegelungsmechanismus betätigt, so dass eine Entriegelung zwischen Frontteil und Heckteil hergestellt wird. In diesem Zustand wirkt eine Federkraft und dreht das Heckteil relativ zu dem Frontteil um die zweite Achse. Dabei kann die Drehbewegung des Heckteils relativ zum Frontteil durch Neigung der Lenkereinheit unterstützt werden, bis das Heckteil relativ zum Frontteil um ca. 70° gedreht ist. Im weiteren Verlauf findet eine relative Drehbewegung zwischen Lenkereinheit und Frontteil statt, bis ein Anschlag erreicht ist. Das Heckteil hat sich dadurch relativ zum Frontteil um ca. 140° gedreht, so dass der Caddy-Zustand erreicht ist. Zum Überführen vom Caddy-Zustand in den Trolley-Zustand (180°) wird die Riegeleinrichtung gelöst. Nun wird von Hand oder per Fuß gegen das Heckteil gedrückt, so dass eine weitere Drehbewegung stattfindet, bis die Riegeleinrichtung in eine Heckträgerbohrung eingreift.

Aufgabe der Erfindung ist es, einen verbesserten faltbaren Roller zu schaffen, der die oben genannten Nachteile zumindest teilweise vermeidet oder wenigstens reduziert. Diese Aufgabe wird durch den Gegenstand mit den Merkmalen des Anspruch 1 gelöst.

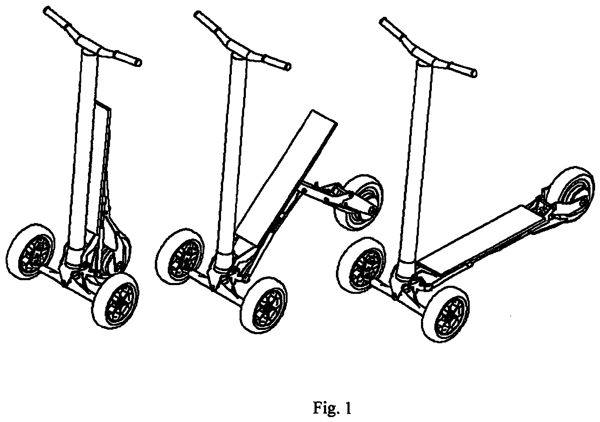

Es wird ein mindestens dreirädriger Roller beschrieben, mit oder ohne elektrische Unterstützung, mit der Besonderheit eines innovativen Faltmechanismus. Wie in Fig. 1 dargestellt ermöglicht der Faltmechanismus sowohl im aufgefalteten als auch im zusammengefalteten Zustand einen ständigen Bodenkontakt aller Räder, wobei sich der Schwerpunkt des Rollers ständig zwischen den Rädern befindet. Somit kann der Roller im jeweiligen Zustand und in allen Zwischenzuständen selbstständig stehen. Dies bietet einen wesentlichen Vorteil hinsichtlich der Verstaubarkeit des Rollers und ermöglicht einen komfortablen Transport, beispielsweise als Trolley.

Eine weitere Besonderheit des hier beschriebenen Faltmechanismus besteht darin, dass dessen Aktivierung über die Betätigung eines einzigen Hebels realisiert wird, welcher mit dem Fuß betätigt werden kann. Die Betätigung des Hebels führt zur Entarretierung einer Gasfeder (12) oder einer mechanischen Feder, die den Faltmechanismus antreibt und, je nach Federkraft, zu einem vollständigen Zusammenfalten des Rollers führt. Somit muss sich der Anwender weder zu Boden bücken noch mehrere Handgriffe absolvieren, um den Roller zusammenzufalten.

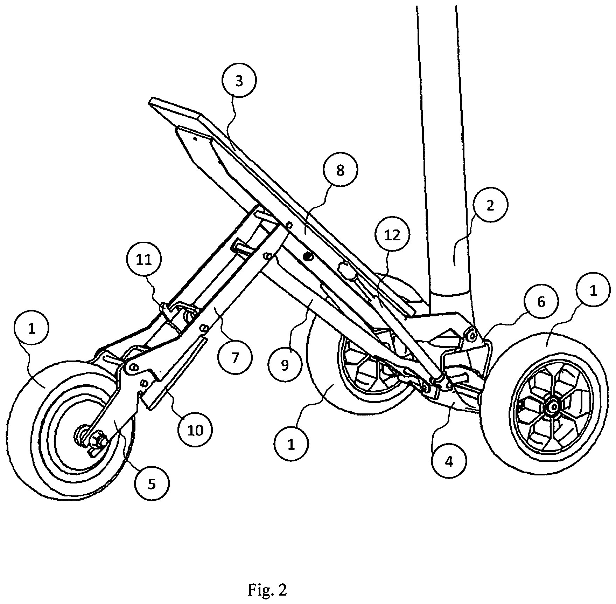

Der beanspruchte Roller umfasst folgende Bauteile, wie in Fig. 2 dargestellt: Drei Räder (1), eine Lenksäule (2) im vorderen Bereich des Rollers, ein Trittbrett (3), eine Vorderachse (4) zur Aufnahme der Vorderräder, eine Hinterradaufhängung (5) zur Aufnahme des Hinterrads, einen Faltmechanismus, letzterer bestehend aus einer Vorderachsaufhängung (6), die eine Vorrichtung zur Aufnahme der Lenksäule (2) und zur Aufnahme der Vorderachse (4) vorsieht, einem Unterboden (7), an dem die Hinterradaufhängung (5) angebracht ist, einem Hauptboden (8), einer Synchronisierungsstange (9), einem Betätigungshebel (10) zur Auslösung des Faltvorgangs, und einer federbeaufschlagten Rasterplatte (11) zur Sicherung des Erhalts des aufgefalteten und / oder des zusammengefalteten Zustandes.

Der Hauptboden (8) ist mittels einer Scharnierachse mit der Vorderachsaufhängung (6) verbunden. Der Unterboden (7) ist mittels einer Scharnierachse mit dem Hauptboden (8) verbunden und die Synchronisierungsstange (9) ist am jeweiligen Ende durch Scharnierachsen oder Gelenkverbinder mit der Vorderachsaufhängung (6) und dem Unterboden (7) verbunden. Die Synchronisierungsstange (9) gewährleistet, dass der Schwerpunkt des Rollers während des Faltvorgangs immer zwischen Vorder- und Hinterrädern bleibt.

Zusätzlich umfasst der genannte Faltmechanismus eine oder mehrere Gasfedern (12), welche zwischen Hauptboden (8) und Vorderachsaufhängung (6) vorgespannt sind. Alternativ kann die Gasfeder (12) auch zwischen Vorderachsaufhängung (6) und Unterboden (7) vorgespannt werden. Die Gasfeder (12) dient dazu, den Faltmechanismus anzutreiben. Zusammen mit der Synchronisierungsstange (9) wird ein eigenständiges Zusammenfalten des Rollers ermöglicht, ohne dass der Anwender den Roller dabei halten muss und ohne dass der Roller dabei umkippt.

Das Trittbrett (3) ist die Fläche, auf der der Anwender während der Fahrt steht. Das Trittbrett (3) ist in diesem Beispiel fest mit dem Hauptboden (8) verbunden, und bilden somit ein Bauteil. Eine Alternative dazu ist, das Trittbrett (3) nur mit dem Unterboden (7) zu verbinden.

Im aufgefalteten Zustand werden der Hauptboden (8) und der Unterboden (7) mittels der Rasterplatte (11) miteinander arretiert. Die Arretierung und die Scharnierverbindung gewährleisten eine feste Verbindung zwischen Hauptboden (8) und Unterboden (7). Diese ist notwendig, damit sich während der Fahrt im aufgefalteten Zustand der Faltmechanismus nicht unkontrolliert zusammenklappt, beispielsweise beim Überfahren von Hindernissen oder durch Unebenheiten in der Fahrbahn.

Wird der Betätigungshebel (10) gedrückt, beispielsweise mit dem Fuß, löst sich die Rasterplatte (11) vom Hauptboden (8). Daraufhin können die Gasfedern (12) den Faltmechanismus zusammenfalten, indem sie den Hauptboden (8) nach oben drücken. Die Synchronisierungsstange (9) zieht dabei den Unterboden (7) samt Hinterradaufhängung (5) und Hinterrad in Richtung Vorderachsaufhängung (6), oder alternativ die Vorderachsaufhängung (6) in Richtung Hinterradaufhängung (5). Somit wird der Roller eigenständig vom aufgefalteten Zustand in den zusammengefalteten Zustand befördert, wobei der Schwerpunkt des Rollers ständig zwischen den Rädern bleit und verhindert dass der Roller beim Zusammenfalten umkippt.

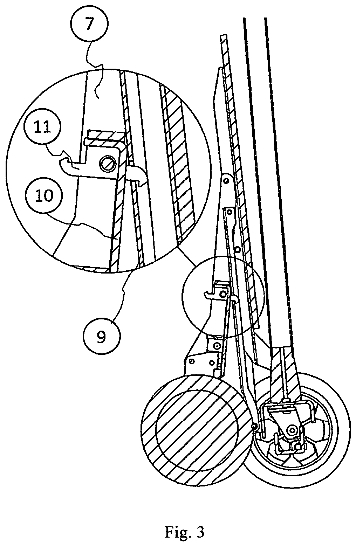

Des Weiteren fungiert die federbeaufschlagte Rasterplatte (11) als Sicherungsmechanismus sowohl im aufgefalteten Zustand als auch im zusammengefalteten Zustand und gewährleistet, dass der Faltmechanismus nur dann seinen Zustand ändern kann, wenn der Anwender den Betätigungshebel (10) drückt. Die Rasterplatte (11) ist mittels einer Scharnierachse am Unterboden (7) angebracht und federbeaufschlagt, dergestalt dass ein Drücken des Betätigungshebels (10) die Rasterplatte (11) verdreht. Die Sicherung des zusammengefalteten Zustandes wird durch das federbeaufschlagte Eingreifen der Rasterplatte (11) in die Synchronisierungsstange (9) realisiert - siehe Fig. 3. Die Sicherung des aufgefalteten Zustandes wird durch das federbeaufschlagte Eingreifen der Rasterplatte (11) in den Hauptboden (8) realisiert. Die Entriegelung jener Zustände wird über den Betätigungshebel (10) ausgelöst, welcher die Rasterplatte (11) entgegen deren Federbeaufschlagung verdreht und somit den Eingriff der Rasterplatte (11) von dem Hauptboden (8) und/oder von der Synchronisierungsstange (9) löst.

Als Beispiel wurde hier ein Roller mit zwei Vorderrädern und einem Hinterrad beschrieben. Der Faltmechanismus ist jedoch nicht auf diese Konfiguration beschränkt und kann auch bei Rollern und/oder Fahrzeugen mit einem Vorderrad und zwei Hinterrädern, oder mit zwei Vorderrädern und zwei Hinterrädern, angewendet werden.

## Patentansprüche

1. Faltbarer alleinstehender Roller, umfassend mindestens drei Räder (1), eine Lenksäule (2), ein Trittbrett (3), eine Vorderachse (4) zur Aufnahme mindestens eines Vorderrads, eine Hinterradaufhängung (5) zur Aufnahme mindestens eines Hinterrads, einen Faltmechanismus, letzterer bestehend aus einer Vorderachsaufhängung (6), die eine Vorrichtung zur Aufnahme der Lenksäule (2) und zur Aufnahme der Vorderachse (4) vorsieht, einem Unterboden (7), an dem die Hinterradaufhängung (5) angebracht ist, einem Hauptboden (8), einer Synchronisierungsstange (9), einem Betätigungshebel (10) zur Auslösung des Faltvorgangs, einer Rasterplatte (11) zur Sicherung des Erhalts des aufgefalteten und/oder des zusammengefalteten Zustands, wobei der Hauptboden (8) mittels einer Scharnierachse mit der Vorderradaufhängung (6) verbunden ist, der Unterboden (7) mittels einer Scharnierachse mit dem Hauptboden (8) verbunden ist, die Synchronisierungsstange (9) am jeweiligen Ende durch Scharnierachsen oder Gelenkverbinder mit der Vorderachsaufhängung (6) und dem Unterboden (7) verbunden ist, wobei die Synchronisierungsstange (9) gewährleistet, dass der Schwerpunkt des Rollers während des Faltvorgangs immer zwischen den Vorder- und Hinterrädern bleibt und dass der Unterboden (7) und/oder der Hauptboden (8) mittels mindestens einer Feder mit der Vorderachsaufhängung (6) verbunden ist, wobei die Feder eine Gasfeder (12) oder eine mechanische Feder ist und dazu dient, das Zusammenfalten des Rollers vollständig zu vollbringen.

2. Roller nach Anspruch 1, **dadurch gekennzeichnet, dass** mit der Betätigung des Betätigungshebels (10) der Faltmechanismus entarretiert wird und durch die eine oder durch die mehreren Gasfedern (12) oder mechanische Feder oder mechanischen Federn der Faltvorgang des Rollers unterstützt oder vollständig vollbracht wird.

3. Roller nach Anspruch 1 oder 2, **dadurch gekennzeichnet, dass** das Trittbrett (3) entweder mit dem Unterboden (7) oder mit dem Hauptboden (8) fest verbunden ist und somit in der jeweiligen Ausführung eine Einheit ergeben.

4. Roller nach einem der vorhergehenden Ansprüche, **dadurch gekennzeichnet, dass** er zusammengefaltet werden kann, ohne dass sich das Trittbrett (3) dabei faltet oder teilt, die Lenksäule (2) binnen eines 15°-Kegels vertikal bleibt, ein ständiger Bodenkontakt aller Räder (1) gewährleistet wird, und schließlich im gefalteten Zustand der Radstand des Rollers um mehr als 50% reduziert wird.

5. Roller nach einem der vorhergehenden Ansprüche, **dadurch gekennzeichnet, dass** nach der Entarretierung des Faltmechanismus der Roller eigenständig vom aufgefalteten Zustand in den zusammengefalteten Zustand übergeht, ohne dass der Roller dabei vom Anwender festgehalten werden muss und ohne dass er dabei umkippt.

6. Roller nach einem der vorhergehenden Ansprüche, **dadurch gekennzeichnet, dass** der Hauptboden (8) und der Unterboden (7) neben der Scharnierverbindung auch mittels eines Einrastmechanismus fest miteinander verbindbar sind, um zu verhindern, dass der Roller sich unkontrolliert zusammenfaltet.

7. Roller nach einem der vorhergehenden Ansprüche, **dadurch gekennzeichnet, dass** die Vorderräder mittels einer Wippachse und/oder mit einer Vorrichtung zum Lenken der Räder an der Vorderachsaufhängung (6) angebracht sind.

8. Roller nach einem der vorhergehenden Ansprüche, umfassend einen Sicherungsmechanismus, der den Erhalt des zusammengefalteten und/oder des aufgefalteten Zustandes sichert und eine Zustandsänderung nur dann zulässt, wenn der Anwender dies beabsichtigt.

9. Roller nach einem der vorhergehenden Ansprüche, bei dem mindestens ein Rad motorisiert ist.

10. Roller nach einem der vorhergehenden Ansprüche, **dadurch gekennzeichnet, dass** die Rasterplatte (11) mittels einer Scharnierachse am Unterboden (7) angebracht ist, federbeaufschlagt ist und mittels des Betätigungshebel (10) entgegen deren Federbeaufschlagung verdrehbar ist, dergestalt, dass die Rasterplatte (11) im zusammengefalteten Zustand in die Synchronisierungsstange (9) eingreift um den Erhalt des zusammengefalteten Zustandes zu sichern und/oder im aufgefalteten Zustand in den Hauptboden (8) eingreift um den Erhalt des aufgefalteten Zustandes zu sichern, wobei mittels Drückens des Betätigungshebels (10) der jeder der gesicherten Zustände gelöst werden kann.

## Claims

1. Foldable self-supporting scooter comprising at least three wheels (1), a steering column (2), a footboard (3), a front axle (4) for receiving at least one front wheel, a rear suspension (5) for receiving at least one rear wheel, a folding mechanism, the latter consisting of a front axle suspension (6), which provides a device for receiving the steering column (2) and for receiving the front axle (4), a sub-base (7) to which the rear wheel suspension (5) is attached, a main base (8), a synchronizing rod (9), an actuating lever (10) for initiating the folding operation, a latching plate (11) for securing the maintenance of the unfolded and/or folded state, wherein the main base (8) is connected to the front axle suspension (6) by means of a hinge pin, the sub-base (7) is connected to the main base (8) by means of a hinge pin, the synchronizing rod (9) is connected to the front axle suspension (6) and to the sub-base (7) at respective ends by hinge pins or hinge connectors, wherein the synchronizing rod (9) provides that the center of gravity of the scooter remains between the front and rear wheels at all times during the folding operation, and that the sub-base (7) and/or the main base (8) is connected to the front axle suspension (6) by means of at least one spring, wherein the spring is a gas spring (12) or a mechanical spring and serves to complete the folding of the scooter.

2. Scooter according to claim 1, **characterised in that** the folding mechanism is unlocked upon actuation of the actuating lever (10) and the folding operation of the scooter is facilitated or completed by the one or more gas springs (12) or mechanical spring or mechanical springs.

3. Scooter according to claim 1 or 2, **characterised in that** the footboard (3) is fixedly connected either to the sub-base (7) or to the main base (8), thus forming a unity in the respective embodiment.

4. Scooter according to any one of the preceding claims, **characterised in that** it can be folded without the footboard (3) folding or splitting, the steering column (2) remaining vertical within a 15° cone, a constant contact with the ground of all the wheels (1) being provided, and finally, in the folded state, the wheelbase of the scooter being reduced by more than 50%.

5. Scooter according to any one of the preceding claims, **characterised in that**, after unlocking the folding mechanism, the scooter autonomously passes from the unfolded state to the folded state, without the need for the scooter to be held by the user and without tipping over.

6. Scooter according to any one of the preceding claims, **characterised in that** the main base (8) and the sub-base (7), in addition to the hinge connection, can further be firmly connected to each other by means of a latching mechanism to prevent the scooter from folding in an uncontrolled manner.

7. Scooter according to any one of the preceding claims, **characterised in that** the front wheels are attached to the front axle suspension (6) by means of a rocker axle and/or with a device for steering the wheels.

8. Scooter according to any one of the preceding claims, comprising a securing mechanism that retains the folded and/or unfolded state and allows a change of state only when intended by the user.

9. Scooter according to any one of the preceding claims, wherein at least one wheel is motorized.

10. Scooter according to any one of the preceding claims, **characterised in that** the latching plate (11) is mounted on the sub-base (7) by means of a hinge pin, is spring-loaded and can be rotated by means of the actuating lever (10) against the spring loading thereof, in such a manner that the latching plate (11) in the folded state engages in the synchronizing rod (9) to secure the maintenance of the folded state and/or in the unfolded state engages in the main base (8) to secure the maintenance of the unfolded state, wherein by pressing the actuating lever (10) each of the secured states can be released.

## Revendications

1. Trottinette autoportante pliable comprenant au moins trois roues (1), une colonne de direction (2), un marchepied (3), un essieu avant (4) destiné à recevoir au moins une roue avant, une suspension arrière (5) destinée à recevoir au moins une roue arrière, un mécanisme de pliage, ce dernier étant constitué d'une suspension d'essieu avant (6), qui prévoit un dispositif pour recevoir la colonne de direction (2) et pour recevoir l'essieu avant (4), une sous-base (7) à laquelle est montée la suspension arrière (5), une base principal (8), une tige de synchronisation (9), un levier d'actionnement (10) pour déclencher le processus de pliage, une plaque crantée (11) pour assurer le maintien de l'état déplié et/ou de l'état replié, la base principal (8) étant relié à la suspension avant (6) par un axe de charnière, la sous-base (7) étant relié à la base principal (8) par un axe de charnière, la tige de synchronisation (9) étant reliée à chaque extrémité à la suspension avant (6) et à la sous-base (7) par des axes de charnière ou des connecteurs articulés, dans lequel la tige de synchronisation (9) assure, que le centre de gravité de la trottinette reste toujours entre les roues avant et arrière pendant le processus de pliage et que la sous-base (7) et/ou la base principal (8) est relié à la suspension de l'essieu avant (6) au moyen d'au moins un ressort, le ressort étant un ressort à gaz (12) ou un ressort mécanique et servant à achever le pliage de la trottinette.

2. Trottinette selon la revendication 1, **caractérisée en ce qu'**avec l'actionnement du levier d'actionnement (10), le mécanisme de pliage est débloqué et le processus de pliage de la trottinette est assisté ou entièrement réalisé par un ou plusieurs ressorts à gaz (12) ou par un ou plusieurs ressorts mécaniques.

3. Trottinette selon la revendication 1 ou 2, **caractérisée en ce que** le marchepied (3) est solidaire soit de la sous-base (7), soit de la base principal (8), formant ainsi une unité dans la réalisation respective.

4. Trottinette selon l'une quelconque des revendications précédentes, **caractérisée en ce qu'**elle peut être pliée sans que le marchepied (3) ne se plie ou ne se divise, **en ce que** la colonne de direction (2) reste verticale à l'intérieur d'un cône de 15°, **en ce qu'**un contact permanent de toutes les roues (1) avec le sol est assuré, et enfin **en ce qu'**à l'état plié, l'empattement de la trottinette est réduit de plus de 50%.

5. Trottinette selon l'une quelconque des revendications précédentes, **caractérisée en ce qu'**après le déblocage du mécanisme de pliage, la trottinette passe de manière autonome de l'état déplié à l'état replié, sans que l'utilisateur n'ait alors à tenir la trottinette et sans qu'elle ne se renverse.

6. Trottinette selon l'une quelconque des revendications précédentes, **caractérisée en ce que** la base principal (8) et le fond inférieur (7), outre la liaison par chambrage, peuvent également être reliés de manière fixe l'un à l'autre au moyen d'un mécanisme d'encliquetage afin d'éviter que la trottinette ne se replie de manière incontrôlée.

7. Trottinette selon l'une quelconque des revendications précédentes, **caractérisé en ce que** les roues avant sont montées sur la suspension d'essieu avant (6) au moyen d'un axe de basculement et/ou d'un dispositif de direction des roues.

8. Trottinette selon l'une quelconque des revendications précédentes, comprenant un mécanisme de sécurité qui assure le maintien de l'état plié et/ou de l'état déplié et ne permet un changement d'état que si l'utilisateur en a l'intention.

9. Trottinette selon l'une quelconque des revendications précédentes, dans lequel au moins une roue est motorisée.

10. Trottinette selon l'une quelconque des revendications précédentes, **caractérisée en ce que** la plaque crantée (11) est montée sur la sous-base (7) au moyen d'un axe de charnière, est sollicitée par un ressort et peut être tournée au moyen du levier d'actionnement (10) à l'encontre de sa sollicitation par ressort, de telle sorte que, que la plaque crantée (11), à l'état replié, s'engage dans la tige de synchronisation (9) pour assurer le maintien de l'état replié et/ou, à l'état déplié, s'engage dans la base principal (8) pour assurer le maintien de l'état déplié, chacun des états assurés pouvant être libéré en appuyant sur le levier d'actionnement (10).
